# EUROPEAN PATENT SPECIFICATION

(11) **EP 1 831 873 B1**
(45) Date of publication and mention of the grant of the patent: **24.11.2010**
(21) Application number: 05850884.7
(22) Date of filing: 19.12.2005
(51) Int. Cl.: G11B 7/0037, G11B 7/0045, G11B 7/125

(54) **PULSED LASER MODE FOR WRITING LABELS**
GEPULSTES LASERVERFAHREN ZUR BESCHRIFTUNG VON ETIKETTEN
MODE LASER PULSE POUR L'ECRITURE D'ETIQUETTES

(30) Priority: 22.12.2004 EP 04106855
(43) Date of publication of application: 12.09.2007
(73) Proprietor: Koninklijke Philips Electronics N.V., 5621 BA Eindhoven (NL)
(72) Inventor: BAKX, Johannes, L., NL-5656 AA Eindhoven (NL)
(74) Representative: Uittenbogaard, Frank
(86) International application number: PCT/IB2005/054310
(87) International publication number: WO 2006/067726

(56) References cited:
- US-A1- 2003 108 708
- US-A1- 2003 161 224
- US-A1- 2003 179 679

## Description

The invention relates to an apparatus and a method for writing a label on a surface of an object, in particular the invention relates to an apparatus and a method that allows writing a visible label on the top surface of an optical disk by using the laser in the optical disk device.

Information about the content on a recordable optical disk, such as type of data, titles or other labels may be provided to the top surface by providing a sticker, e.g. labeled by a laser printer, onto the top surface. Alternatively, handwritten notes may be provided to mark the content on the optical disk.

The use of a sticker involves a printer and it may be tedious to provide a sticker with correct alignment to the top surface of an optical disk, whereas handwritten notes may not be appealing for aesthetic reasons.

In the published US application US2003/0161224 a method and apparatus are provided that allow a label to be formed directly on an optical disk by using a write laser mechanism with an optical disk drive. A special surface is needed in order to write the label.

A problem may arise for large dark areas of the label since the laser is switched on for a long time. This is critical with respect to heating since writing the label may take 20-40 minutes, depending on the image quality and size.

US 2003/108708 reflecting the preamble of claims 1 and 5 discloses an integrated system for individually labeling a recording medium at the time that digital information is recorded thereon, by recording write data with a digital recorder on the read/write surface of the CD/DVD and recording image data by inducing visible color change with a laser in laser sensitive materials on the opposite surface of the CD/DVD.

US 2003/179679 discloses an optical disc in which a blue color forming sub-layer, green color forming sub-layer and red color forming sub-layer which start to form colors upon application of different amounts of energy are superposed on the image surface of the optical disc. The color forming sub-layer which requires the smallest amount of energy to form color is first illuminated with laser of the power required to realize color formation from that sub-layer; subsequently, this sub-layer is illuminated with ultraviolet radiation to fix the color it has formed. Then, the next color forming sub-layer is illuminated with laser of the required power and after fixing the color it has formed, the last color forming sub-layer is illuminated with the required laser to form color.

The inventor of the present invention has appreciated that the amount of heat generation during the creation of labels may be a problem, and has in consequence devised the present invention.

The present invention seeks to provide an improved apparatus and method of writing a label on a surface of an object. Preferably, the invention alleviates or mitigates one or more of the above or other disadvantages singly or in any combination.

Accordingly there is provided, in a first aspect, an apparatus for writing a label on a surface of an object, the apparatus comprising
- a radiation source controllable to emit light,
- control means for controlling the radiation source to emit radiation pulses, the radiation pulses being emitted so as to obtain a visible contrast or color change in a predetermined area element on the object, said control means being adapted to control the radiation source to emit a multitude of radiation pulses so as to induce a visible contrast or color change in a multitude of area elements,
characterized in that said control means are adapted for controlling the radiation source to emit radiation pulse trains each comprising a plurality of sub-pulses, a radiation pulse train being emitted so as to obtain a visible contrast or color change in a predetermined area element on the object, wherein the radiation power of the radiation source is zero or close to zero between two successive radiation sub-pulses of the pulse train.

The apparatus may comprise or may be an optical drive system, such as a system using a radiation source such as laser, or more specifically such as a diode laser, reading and/or recording data to a data storage medium. The object may be such an object as a data storage medium, including such media as a recordable CD-disks, DVD-Disks, Blu Ray-disk, etc.

The object may be provided with a top surface adapted to interact with the light emitted from the radiation source in such a way that a visible contrast or color change is induced in a predetermined area element on the object. The top surface of the object may be coated with one or more layers adapted, upon being exposed to energy in the form of light, to undergo a visual change, such as a visual contrast or color change. By providing a visible contrast or color change in a multitude of area elements a label, such as an image, may be provided. The label may be a monochrome label, a grey-scale label or a color label depending upon the surface of the object and depending upon how the radiation source is driven.

The resolution of the label may be correspond to spot size of the emitted light, the resolution may range from 0.5 to 25 micron, such as from 1 to 15 micron, such as from 5 to 10 micron.

The element may be provided with the visible contrast or color change by emitting a radiation pulse train. It is an advantage to emit a radiation pulse train to induce a visible contrast or color change, since the thermal load of the radiation source may be reduced as compared to emitting a single pulse of the same, or comparable, width as the pulse train.

The radiation power of the radiation source may be reduced below a specific threshold between two successive sub-pulses in the pulse train, and especially the radiation power may be reduced to zero or to a value close to zero. The radiation power may be controlled by controlling the supply current of the radiation source. Specifically, the radiation source may be turned off for a specific period of time between two successive sub-pulses in the pulse train.

It is an advantage to reduce the radiation power to zero or to a value close to zero between two successive sub-pulses by turning off the radiation source for a predetermined time between two successive sub-pulses, since the thermal load is reduced the most by turning off the radiation source.

The shape of the sub-pulses in a pulse train may be such that the pulse train may comprise substantially square sub-pulses of a duration Tₒₙ and separated by a duration T_{off}. Alternatively, the pulse train may comprise sub-pulses of variable heights. The variable height of the sub-pulses may e.g. be obtained by a duty-cycle modulation of the radiation pulse train.

It is an advantage to provide an apparatus with a large freedom in the appearance of the pulse train, in order to provide a versatile apparatus which may be adapted to various different types of surfaces on which the label may be created.

According to a second aspect of the present invention a corresponding method of of writing a label on a surface of an object is provided.

The method may be implemented either by software, firmware or hardware in an apparatus according to the first aspect of the invention in order for controlling the apparatus in a manner so as to reduce the thermal load of the radiation source.

The visible contrast or color change in an element may be induced by converting an image of the label into a time sequence corresponding to a passage of the radiation source of a given element for a predefined movement of the object, and wherein the time sequence is provided to a controller of the radiation source, so that the radiation source emits a pulse train during the passage of an element wherein a visible contrast or color change is to be induced, and wherein the radiation source is turned off during the passage of an element wherein the visible contrast or color change is to be induced.

It is an advantage to provide the label according to this method since the method may be implemented by controlling the supply current of the radiation source as well as a controlled movement of the object and/or radiation source. In standard optical drives a controlled movement of the optical disk and the laser is already provided for, and only a control of the supply current may be needed. Such control may be implemented by providing control software to already existing optical drives.

The apparatus may be or may be part of an optical data storage system. The data storage system may include an optical pickup unit (OPU), wherein the data storage medium is an optical disk inserted into a disk drive, and wherein the label is provided to the optical disk by means of the radiation source present in the optical pickup unit by inserting the disk upside down into the drive. Alternatively, an additional radiation source may be provided on the opposite side of the OPU, in this way a label may be created on the top side of a disk irrespectively of whether the OPU is in use for reading or recording data from or on the disk.

It is an advantage to provide the apparatus in a standard type of optical drive.

These and other aspects, features and/or advantages of the invention will be apparent from and elucidated with reference to the embodiments described hereinafter. Embodiments of the invention will be described, by way of example only, with reference to the drawings, in which
Fig. 1 illustrates modes of driving the laser,
Fig. 2 illustrates an embodiment of a method of applying the present invention.

Preferred embodiments are hereafter described wherein the apparatus for writing the label on a surface of an object, is an optical disk drive comprising a laser, and wherein the object is a such as a CD or DVD disk, and wherein the label provided is a monochrome label.

A visual change may be applied to the surface of a disk by providing a disk with a surface with the ability of undergoing a visible contrast or color change when a certain amount of light is provided to the surface. The surface may be coated with one or more layers exhibiting such an ability upon interaction with light, e.g. by changing chemical composition, change chemical structure etc.

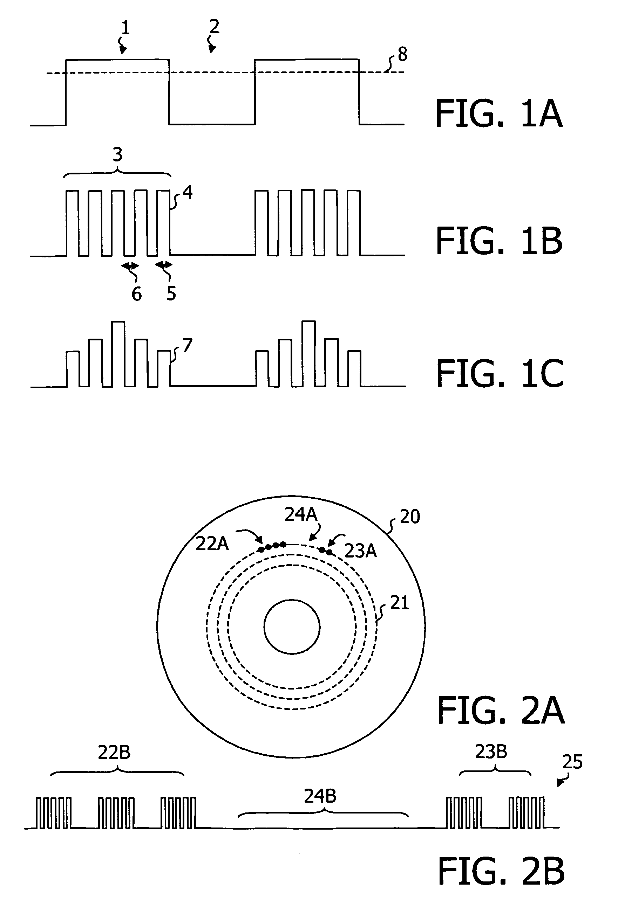

In order to provide a visual change in a predefined area, the laser may be driven as illustrated in Fig. 1A, which illustrates the current supplied to the laser, thus the laser emits light 1 when receiving current above a certain threshold 8 and does not emit light 2 for a supply current below the threshold 8. Thus for the supply current illustrated in Fig. 1A two areas would be provided with a visual change (a black dot), separated by a blank area (a white dot).

However, driving the laser as illustrated in Fig. 1A may generate a critical heating of the laser in dark areas. By driving the laser as illustrated in Fig 1B, the same visible change on the surface of the disk may still be provided, but the thermal load of the laser is reduced. Fig. 1B illustrates a laser supply current in the form of pulse trains, where the laser is turned off between two successive sub-pulses in the pulse trains as well as between successive pulse trains. The pulse train is characterized by a sub-pulse duration 5 Tₒₙ and a separation time 6 of the sub-pulses T_{off,} where the laser is turned off. The time constants Tₒₙ and T_{off} may be adjusted in accordance with the necessary amount of energy to be supplied during the pulse train.

In an optical drive when recording data on a recordable medium, the writing speed is very high with a time separation between writing the individual data elements in the nanosecond range. Since the lasers that are used to write the data on the recordable medium suffers from a finite rise time, e.g. it takes a certain amount of time between turning on the laser and until maximal emission is achieved, the lasers are driven with a current modulation around the emission threshold of the laser, in this way the laser may flip between emission and no emission very fast. In this way however, the laser is constantly supplied with current resulting in heat generation.

In order to provide sufficient light to a specific element on the top surface of a disk to induce a visual change, it is necessary to rotate the disk very slowly, such as with a rotational speed of only 0.2 to 0.4 m/s, more than 10 times slower than in the data recording mode.

With such low rotational speeds, the rise time of the laser is not crucial, and consequently the laser may be turned off between the sub-pulses in the pulse train. The turning off of the supply current of the laser reduces the overall temperature during the writing of a label.

The shape of the sub-pulses may vary e.g. by modulating the height 7 of the individual sub-pulses, e.g. by means of a duty cycle modulation.

The time constants Tₒₙ and T_{off} may be chosen depending upon the characteristics of the laser, the medium, and the diameter of the radiation spot at the label. This diameter is typically 10 µm, so at a linear medium speed of 0.4 m/s, the disk must travel 25 µs before the spot completely passes a certain point. If a value of Tₒₙ < 25 µs is chosen, e.g. Tₒₙ = 5 µs, a value of T_{off} = 20 µs should be chosen if the entire spot diameter contributes to the writing process. These numbers result in a significant power reduction. By taking Tₒₙ still smaller, even more reduction would be obtained. But in this case, it becomes difficult to switch the laser current all the way to zero and still have sharp pulses. Also the maximum peak power of the laser should not be obtained. A possible criterion of how to chose the time constants may be to take Tₒₙ as small as possible without jeopardizing the maximum peak power and the pulse form. Next T_{off} is taken as large as possible while still producing a continuous line of dots.

In Fig. 2 the principle of providing a label to the top side of a disk 20 is illustrated. Many different types of labels may be provided, such as text and images.

The user may compose a desired label e.g. by using a dedicated software application, such a label may be stored in a bitmap format, such as a bmp-format or jpg-format. These formats are Cartesian formats where a 2D grid is defined and to each grid element a value is assigned representing whether or not the element is filled, such a "1" for a black dot and "0" for a white dot. To provide the label to the laser controller, the image may be transformed into a polar type coordinate system. A disk grid consisting of concentric circles may be defined as illustrated in Fig. 2A. On each grid a number of elements, such as pixel elements are defined. For the inner most circle N elements may be present along the circle, whereas for the next circle M elements may be present, where M>N, since the circumference of the concentric circles increases outwardly from the center. The number of pixel elements may correspond to the circumference divided by the laser spot diameter. Thus a pixel element on the Cartesian representation of the label may be transformed into a polar type coordinate system with one coordinate referring to the specific concentric circle and a second coordinate referring to the number of the element on the circle.

The movement of the laser across the surface of the disk is known since the geometric aspects of the system are well defined and the rotational speed is known. Therefore the polar-type representation of the label may be transformed into a time sequence where a pulse train is provided when the laser passes the element to be provided with a black dot. This time sequence may advantageously be fixed to the system clock, the system clock being the master clock of the electronic of the system. The system clock is locked to a spoke pattern on the disk, which is read by a special sensor in the drive. This provides very accurate speed control and pixel placing.

In Fig. 2A three concentric circles representing three grid circles are illustrated. On the outer most grid circle 21 three consecutive elements is to be colored 22A and a blank section 24A separates two elements also to be colored 23A. In Fig. 2B is illustrated the supply current 25 provided to the laser corresponding to the passage of the section on the disk, where first three consecutive pulse trains 22B are provided, then a blank section where the laser is maintained off 24B and subsequently the two consecutive pulse trains 23B. In this way an entire image may be provided to the disk.

Only the monochrome labels have been described, it is however within the capability of the skilled person to extend also to providing a grey-scale label, e.g. by using a raster type coloring of the elements. In order to provide a color label the top surface of the disk should be adapted to exhibit a color change upon interaction with light.

Although the present invention has been described in connection with preferred embodiments, it is not intended to be limited to the specific form set forth herein. Rather, the scope of the present invention is limited only by the accompanying claims.

In this section, certain specific details of the disclosed embodiment such as specific devices, pulse shapes, etc., are set forth for purposes of explanation rather than limitation, so as to provide a clear and thorough understanding of the present invention. However, it should be understood readily by those skilled in this art, that the present invention may be practiced in other embodiments which do not conform exactly to the details set forth herein, without departing from the scope of the invention as defined in the appended claims. Further, in this context, and for the purposes of brevity and clarity, detailed descriptions of well-known apparatus, circuits and methodology have been omitted so as to avoid unnecessary detail and possible confusion.

Reference signs are included in the claims, however the inclusion of the reference signs is only for clarity reasons and should not be construed as limiting the scope of the claims.

## Claims

1. An apparatus for writing a label on a surface of an object (20), the apparatus comprising:
- a radiation source controllable to emit light,
- control means for controlling the radiation source to emit radiation pulses (3,7), the radiation pulses being emitted so as to obtain a visible contrast or color change in a predetermined area element on the object (22A, 23A), said control means being adapted to control the radiation source to emit a multitude of radiation pulses so as to induce a visible contrast or color change in a multitude of area elements,
**characterized in that** said control means are adapted for controlling the radiation source to emit radiation pulse trains (3,7) each comprising a plurality of sub-pulses, a radiation pulse train being emitted so as to obtain a visible contrast or color change in a predetermined area element on the object (22A, 23A), wherein the radiation power of the radiation source is zero or close to zero between two successive radiation sub-pulses of the pulse train.

2. An apparatus according to claim 1, wherein the pulse train comprises substantially square sub-pulses (4,7) of a duration Tₒₙ (5) and separated by a duration T_{off} (6).

3. An apparatus according to claim 1, wherein the pulse train comprises sub-pulses of variable heights.

4. An apparatus according to claim 3, wherein a variable height of the sub-pulses is obtained by a duty-cycle modulation of the radiation pulse train.

5. A method of writing a label on a surface of an object (20), the method comprising the steps of:
- emitting light by a radiation source,
- controlling the radiation source to emit radiation pulses (3,7), the radiation pulses being emitted so as to obtain a visible contrast or color change in a predetermined area element on the object (22A, 23A), wherein a multitude of radiation pulses is emitted to induce a visible contrast or color change in a multitude of area elements,
**characterized by** controlling the radiation source to emit radiation pulse trains (3,7) each comprising a plurality of sub-pulses, a radiation pulse train being emitted so as to obtain a visible contrast or color change in a predetermined area element on the object (22A, 23A), wherein the radiation power of the radiation source is zero or close to zero between two successive radiation sub-pulses of the pulse train.

6. Method according to claim 5, wherein the visible contrast or color change in an elements is induced by converting an image of the label into a time sequence (25) corresponding to a passage of the radiation source of a given element for a predefined movement of the object, and wherein the time sequence is provided to a control means of the radiation source for controlling the radiation source to emit said radiation pulse trains.

7. An optical data storage system including a disk drive comprising an apparatus as claimed in claim 1 for writing a label on a surface of an optical disk inserted into the disk drive, wherein the label is provided to the optical disk by means of the radiation source present in the apparatus.

## Patentansprüche

1. Vorrichtung zur Beschriftung eines Etiketts auf einer Oberfläche eines Objekts (20), wobei die Vorrichtung umfasst:
- eine Strahlungsquelle, die so steuerbar ist, dass sie Licht emittiert,
- Steuermittel, um die Strahlungsquelle so zu steuern, dass diese Strahlungsimpulse (3,7) emittiert, wobei die Strahlungsimpulse emittiert werden, um einen sichtbaren Kontrast oder eine sichtbare Farbänderung in einem vorgegebenen Flächenelement auf dem Objekt (22A, 23A) vorzusehen, wobei die Steuermittel so eingerichtet sind, dass sie die Strahlungsquelle steuern, damit diese eine Vielzahl von Strahlungsimpulsen emittiert, um einen sichtbaren Kontrast oder eine sichtbare Farbänderung in einer Vielzahl von Flächenelementen zu induzieren,
**dadurch gekennzeichnet, dass** die Steuermittel so eingerichtet sind, dass sie die Strahlungsquelle steuern, damit diese Strahlungsimpulsfolgen (3,7) mit jeweils mehreren Teilimpulsen emittiert, wobei eine Strahlungsimpulsfolge emittiert wird, um einen sichtbaren Kontrast oder eine sichtbare Farbänderung in einem vorgegebenen Flächenelement auf dem Objekt (22A, 23A) vorzusehen, wobei die Strahlungsleistung der Strahlungsquelle zwischen zwei aufeinanderfolgenden Strahlungsteilimpulsen der Impulsfolge Null oder nahezu Null beträgt.

2. Vorrichtung nach Anspruch 1, wobei die Impulsfolge im Wesentlichen Rechteckteilimpulse (4,7) umfasst, die eine Dauer Tₒₙ (5) aufweisen und durch eine Dauer T_{off} (6) getrennt sind.

3. Vorrichtung nach Anspruch 1, wobei die Impulsfolge Teilimpulse mit variablen Höhen umfasst.

4. Vorrichtung nach Anspruch 3, wobei eine variable Höhe der Teilimpulse durch eine Tastgrad-Modulation der Strahlungsimpulsfolge erreicht wird.

5. Verfahren zur Beschriftung eines Etiketts auf einer Oberfläche eines Objekts (20), wobei das Verfahren die folgenden Schritte umfasst, wonach:
- Licht von einer Strahlungsquelle emittiert wird,
- die Strahlungsquelle so gesteuert wird, dass sie Strahlungsimpulse (3,7) emittiert, wobei die Strahlungsimpulse emittiert werden, um einen sichtbaren Kontrast oder eine sichtbare Farbänderung in einem vorgegebenen Flächenelement auf dem Objekt (22A, 23A) vorzusehen, wobei eine Vielzahl von Strahlungsimpulsen emittiert wird, um einen sichtbaren Kontrast oder eine sichtbare Farbänderung in einer Vielzahl von Flächenelementen zu induzieren,
**dadurch gekennzeichnet, dass** die Strahlungsquelle so gesteuert wird, dass diese Strahlungsimpulsfolgen (3,7) mit jeweils mehreren Teilimpulsen emittiert, wobei eine Strahlungsimpulsfolge emittiert wird, um einen sichtbaren Kontrast oder eine sichtbare Farbänderung in einem vorgegebenen Flächenelement auf dem Objekt (22A, 23A) vorzusehen, wobei die Strahlungsleistung der Strahlungsquelle zwischen zwei aufeinanderfolgenden Strahlungsteilimpulsen der Impulsfolge Null oder nahezu Null beträgt.

6. Verfahren nach Anspruch 5, wobei der sichtbare Kontrast oder die sichtbare Farbänderung in einem Element durch Umwandlung einer Abbildung des Etiketts in eine Zeitfolge (25), die einem Durchgang der Strahlung der Strahlungsquelle durch ein vorgegebenes Elements für eine vordefinierte Bewegung des Objekts entspricht, induziert wird, und wobei die Zeitfolge einem Steuermittel der Strahlungsquelle zur Verfügung gestellt wird, um die Strahlungsimpulsfolgen zu emittieren.

7. Optisches Datenspeichersystem, das ein Laufwerk mit einer Vorrichtung nach Anspruch 1 umfasst, um ein Etikett auf einer Oberfläche einer in das Laufwerk eingeführten, optischen Platte zu beschriften, wobei das Etikett der optischen Platte mit Hilfe der in der Vorrichtung vorgesehenen Strahlungsquelle zur Verfügung gestellt wird.

## Revendications

1. Appareil pour écrire une étiquette sur une surface d'un objet (20), l'appareil comprenant :
- une source de rayonnement pouvant être commandée pour émettre de la lumière,
- un moyen de commande pour commander la source de rayonnement afin d'émettre des impulsions de rayonnement (3, 7), les impulsions de rayonnement étant émises de façon à obtenir un changement de contraste ou couleur visible dans un élément de zone prédéterminé sur l'objet (22A, 23A), ledit moyen de commande étant adapté pour commander la source de rayonnement afin d'émettre une multitude d'impulsions de rayonnement de façon à induire un changement de contraste ou couleur visible dans une multitude d'éléments de zone,
**caractérisé en ce que** ledit moyen de commande est adapté pour commander la source de rayonnement afin d'émettre des trains d'impulsions de rayonnement (3, 7) comprenant chacun une pluralité de sous-impulsions, un train d'impulsions de rayonnement étant émis de façon à obtenir un changement de contraste ou couleur visible dans un élément de zone prédéterminé sur l'objet (22A, 23A), où la puissance de rayonnement de la source de rayonnement est nulle ou proche de zéro entre deux sous-impulsions de rayonnement successives du train d'impulsions.

2. Appareil selon la revendication 1, dans lequel le train d'impulsions comprend des sous-impulsions sensiblement carrées (4, 7) de durée (T_{marche}) (5) et séparées par une durée (T_{arrêt}) (6).

3. Appareil selon la revendication 1, dans lequel le train d'impulsions comprend des sous-impulsions de hauteurs variables.

4. Appareil selon la revendication 3, dans lequel une hauteur variable des sous-impulsions est obtenue par une modulation du cycle de service du train d'impulsions de rayonnement.

5. Procédé d'écriture d'une étiquette sur une surface d'un objet (20), le procédé comprenant les étapes consistant à :
- émettre de la lumière par une source de rayonnement,
- commander la source de rayonnement pour émettre des impulsions de rayonnement (3, 7), les impulsions de rayonnement étant émises de façon à obtenir un changement de contraste ou couleur visible dans un élément de zone prédéterminé sur l'objet (22A, 23A), où une multitude d'impulsions de rayonnement est émise pour induire un changement de contraste ou couleur visible dans une multitude d'éléments de zone,
**caractérisé par** la commande de la source de rayonnement pour émettre des trains d'impulsions de rayonnement (3, 7) comprenant chacun une pluralité de sous-impulsions, un train d'impulsions de rayonnement étant émis de façon à obtenir un changement de contraste ou couleur visible dans un élément de zone prédéterminé sur l'objet (22A, 23A), où la puissance de rayonnement de la source de rayonnement est nulle ou proche de zéro entre deux sous-impulsions de rayonnement successives du train d'impulsions.

6. Procédé selon la revendication 5, dans lequel le changement de contraste ou couleur visible dans un élément est induit en convertissant une image de l'étiquette en une séquence temporelle (25) correspondant à un passage de la source de rayonnement d'un élément donné pendant un mouvement prédéfini de l'objet, et la séquence de temps est fournie à un moyen de commande de la source de rayonnement pour commander la source de rayonnement afin qu'elle émette lesdits trains d'impulsions de rayonnement.

7. Système de stockage de données optique incluant un lecteur de disque comprenant un appareil tel que revendiqué dans la revendication 1, pour écrire une étiquette sur une surface d'un disque optique inséré dans le lecteur de disque, où l'étiquette est fournie au disque optique au moyen de la source de rayonnement présente dans l'appareil.
